# FASCICULE DE BREVET EUROPEEN

(11) **EP 3 195 113 B1**
(45) Date de publication et mention de la délivrance du brevet: **11.12.2019**
(21) Numéro de dépôt: 15747460.2
(22) Date de dépôt: 03.08.2015
(51) Int. Cl.: G06F 8/35, G06F 8/30, G06F 8/41, G06F 11/36

(54) **PROCÉDÉ DE VÉRIFICATION DE TRAÇABILITÉ DE PREMIÈRES INSTRUCTIONS EN UN LANGAGE DE PROGRAMMATION PROCÉDURALE GÉNÉRÉES À PARTIR DE SECONDES INSTRUCTIONS EN UN LANGAGE DE MODÉLISATION**
VERFAHREN ZUR ÜBERPRÜFUNG DER RÜCKVERFOLGBARKEIT VON ERSTEN BEFEHLEN IN EINER AUS ZWEITEN BEFEHLEN ERZEUGTEN PROZEDURALEN PROGRAMMIERSPRACHE IN EINER MODELLIERUNGSSPRACHE
METHOD FOR VERIFYING TRACEABILITY OF FIRST INSTRUCTIONS IN A PROCEDURAL PROGRAMMING LANGUAGE GENERATED FROM SECOND INSTRUCTIONS IN A MODELLING LANGUAGE

(30) Priorité: 01.08.2014 FR 1457513; 31.07.2015 FR 1557401
(43) Date de publication de la demande: 26.07.2017
(73) Titulaire: Safran Electronics & Defense, 92100 Boulogne-Billancourt (FR)
(72) Inventeur: MORIN, Séverine, F-92100 Boulogne-Billancourt (FR); CORRUBLE, Bertrand, F-92100 Boulogne-Billancourt (FR); TAVERNIER, Bertrand, F-92100 Boulogne-Billancourt (FR); TITEUX, Frédéric, F-92100 Boulogne-Billancourt (FR); RENAULT, Guy, F-92100 Boulogne-Billancourt (FR)
(74) Mandataire: Regimbeau
(86) Numéro de dépôt international: PCT/EP2015/067858
(87) Numéro de publication internationale: WO 2016/016473

(56) Documents cités:
- US-A1- 2005 114 841
- US-A1- 2012 254 827
- US-B1- 8 464 204
- US-B1- 8 522 196

## Description

### DOMAINE TECHNIQUE GENERAL

La présente invention concerne la génération automatisée de code à partir de modèles, et en particulier un procédé de vérification de traçabilité de premières instructions de code en un langage de programmation procédurale produites à partir de secondes instructions de code en un langage de modélisation.

### ETAT DE L'ART

Les aéronefs de dernière génération recourent massivement à l'informatique et utilisent pour cela des logiciels embarqués.

Des environnements de modélisation et génération permettent à des utilisateurs de produire automatiquement du code source à partir de modèles.

Toutefois, il n'est aujourd'hui pas possible de garantir à ces utilisateurs que le code source généré est bien entièrement traçable vers ces modèles, c'est-à-dire qu'il peut exister des séquences d'instructions du code (i.e. des fragments) qui n'ont pas de lien direct avec les modèles amont, et qui sont susceptibles de déclencher des comportements fonctionnels non désirés.

Le code source généré à partir des modèles n'est en effet pas « par construction » traçable vers les modèles. Cependant, une fiabilité irréprochable est requise au vu des conséquences désastreuses que pourrait avoir une erreur informatique pendant le vol d'un avion, et la présence d'instructions non traçables n'est pas acceptable.

L'état de la technique actuelle consiste à soit vérifier manuellement l'absence d'instructions de code source non traçables vers les modèles, et
en cas de présence de telles instructions, à justifier manuellement qu'elles ne peuvent pas introduire de comportement fonctionnel non attendu, soit à faire des campagnes de tests de bas niveau sur le code exécutable pour s'assurer que toute la structure du code a bien été exercée par les tests et qu'il n'existe donc pas (ou plus) d'instructions non atteignables (ce qui révélerait la présence d'instructions de code non traçables vers les modèles).

Des techniques de vérification automatique ont été proposées par exemple dans les documents US 8627276, US 8583414, US 8464204, US2012/254827 et US2005/114841. L'idée est d'utiliser des données de test d'un code objet généré comme éléments d'analyse et contrôle de la traçabilité modèle versus code généré. Ces méthodes apportent satisfaction, mais ne permettent toujours pas de garantir à 100% que le code traçable est transitif vers les modèles, et ne permettent ainsi pas de s'affranchir d'une mesure de couverture structurelle à réaliser manuellement au niveau du code.

Il serait ainsi souhaitable de disposer d'une méthode fiable et reproductible permettant de produire du code source entièrement traçable vers les modèles, de confirmer que le code source produit est effectivement entièrement traçable vers les modèles, et de démontrer de façon fiable et systématique que la mesure de couverture structurelle obtenue au niveau des modèles peut être extrapolée au niveau du code source automatiquement généré.

De plus il serait souhaitable que cette méthode soit éligible à une certification.

### PRESENTATION DE L'INVENTION

Selon un premier aspect, la présente invention se rapporte donc à un procédé de vérification de traçabilité de premières instructions de code en un langage de programmation procédurale générées à partir de secondes instructions de code en un langage de modélisation selon les revendications 1 à 9.

Selon un deuxième aspect, l'invention concerne un équipement de vérification de traçabilité de premières instructions de code en un langage de programmation procédurale produites à partir de secondes instructions de code en un langage de modélisation selon la revendication 10.

Selon un cinquième et un sixième aspect, l'invention concerne un produit programme d'ordinateur comprenant des instructions de code pour l'exécution d'un procédé selon le premier aspect de l'invention de vérification de traçabilité de premières instructions de code en un langage de programmation procédurale générées à partir de secondes instructions de code en un langage de modélisation ; et des moyens de stockage lisibles par un équipement informatique sur lesquels un produit programme d'ordinateur comprend des instructions de code pour l'exécution d'un procédé le premier aspect de l'invention de vérification de traçabilité de premières instructions de code en un langage de programmation procédurale générées à partir de secondes instructions de code en un langage de modélisation.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente un système pour la mise en œuvre du procédé selon l'invention ;
- la figure 2 est une représentation générale de l'architecture d'un mode de réalisation du procédé selon l'invention
- la figure 3 est un schéma illustrant les capacités de vérification du procédé selon l'invention.

### DESCRIPTION DETAILLEE

### Architecture

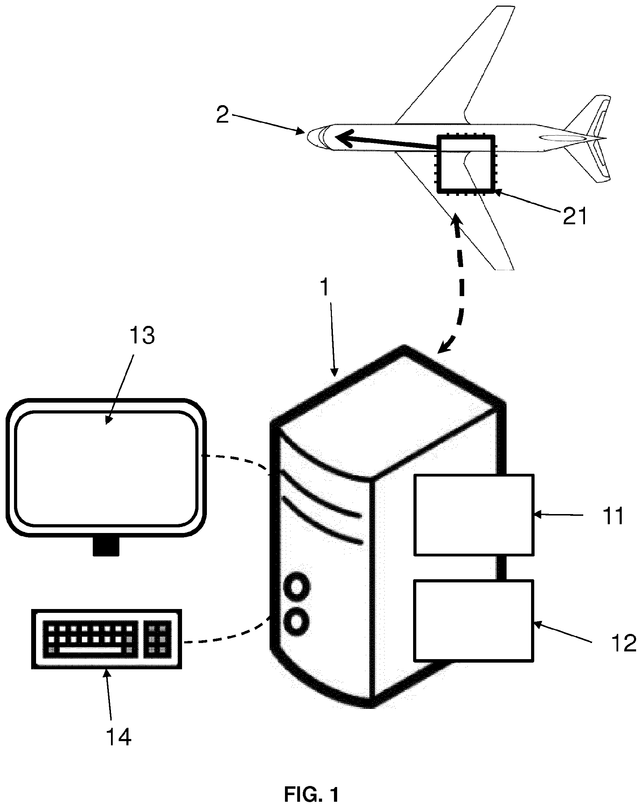

En référence à la **figure 1**, le présent procédé est un procédé de vérification de traçabilité de premières instructions de code en un langage de programmation procédurale produites à partir de secondes instructions de code en un langage de modélisation.

Le procédé est mis en œuvre via un équipement 1 qui peut être n'importe quel poste informatique comprenant des moyens de traitement de données 11 (par exemple un processeur), des moyens de stockage de données 12 (par exemple un disque dur) et des moyens d'affichage d'une interface graphique 13 (par exemple un écran).

Des moyens de saisie 14 (tels qu'un clavier et une souris) permettent à un utilisateur souhaitant utiliser le procédé (et/ou programmer graphiquement) d'interagir avec l'interface graphique 13. Il est à noter que le présent procédé n'est pas limité à l'utilisation d'un poste de travail, et que d'autres types d'équipements tels qu'un serveur peuvent tout à fait être utilisés.

Par programmation procédurale (ou algorithmique) on entend un paradigme de programmation dans lequel une « procédure » contient simplement une série d'étapes à réaliser, à chacune desquelles d'autres procédures peuvent être appelées, voire la procédure elle-même (récursivité). Les premières instructions de code constituent un code source, en un langage procédural typiquement de type C (ou par exemple un langage orienté objet de type Java), destiné à être compilé en un code exécutable puis à être embarqué sur un système 2, par exemple un équipement informatique 21 d'un aéronef. Les premières instructions sont par exemple un fichier source C (.c) accompagné d'un fichier de header (.h).

Le langage de modélisation (celui des secondes instructions), ou MDL (« Model Description Language »), est quant à lui typiquement un langage de programmation graphique, en particulier Simulink®, Scilab, ou tout autre équivalent. De façon classique, la programmation graphique (qui peut être faite via l'équipement 1 ou un autre équipement similaire, on prendra ici l'exemple où c'est le même équipement mais l'homme du métier saura transposer) comprend la sélection puis la disposition via l'interface graphique 13 d'une pluralité d'éléments graphiques chacun représentatif d'un objet fonctionnel informatique (appelés typiquement blocs), puis leur câblage par des liens, ce qui constitue les secondes instructions de code. Les secondes instructions sont par exemple un fichier .mdl accompagné d'un fichier d'initialisation (.m).

Un bloc fonctionnel peut être défini comme une fonction mathématique élémentaire de la forme {*y*₀; *y*₁; ... *yₙ*} = *f* (*u*₀; *u*₁; ... *uₘ*; *x*(*t*)), en d'autres termes une unité logique déterminant un ou plusieurs paramètres de sorties à partir d'un ou plusieurs paramètres d'entrée et d'un éventuel état interne x(t). Cette définition est conforme au Model-Based Design (MBD). Dans les secondes instructions, un bloc fonctionnel est typiquement un bloc graphique (une « boite » avec ses entrées et sorties à câbler). Dans les premières instructions, un bloc fonctionnel est typiquement représenté par une ou plusieurs lignes de codes. On notera qu'un bloc fonctionnel de premières instructions peut être composé de fragments de code non contigus.

A partir des secondes instructions, un module (mis en œuvre par les moyens de traitement de données) génère et stocke sur les moyens de stockage de données 12 les premières instructions de code en utilisant une bibliothèque de règles de génération dudit langage de programmation procédurale à partir du langage de modélisation. Dans l'exemple du Simulink, le module de génération est par exemple RTW (Real-Time Workshop). Ce module de génération doit interpréter le modèle en fonction de ses entrées pour générer un code adapté aux entrées et éventuellement optimiser ce code. Cela constitue le cas échéant une étape (a0) préalable du procédé.

### Procédé

Le présent procédé vise à garantir que le code généré (les premières instructions) correspond réellement aux modèles d'origine (les secondes instructions). Le code doit être traçable et transitif, c'est-à-dire que chaque bloc fonctionnel des premières instructions doit pouvoir être liée de façon bijective aux blocs fonctionnels des secondes instructions : il doit y avoir « tout le code nécessaire, mais rien que le code nécessaire ». En d'autres termes, il ne doit y avoir ni code faux/manquant ni code « inattendu » qui pourrait troubler la mise en œuvre des fonctions attendues.

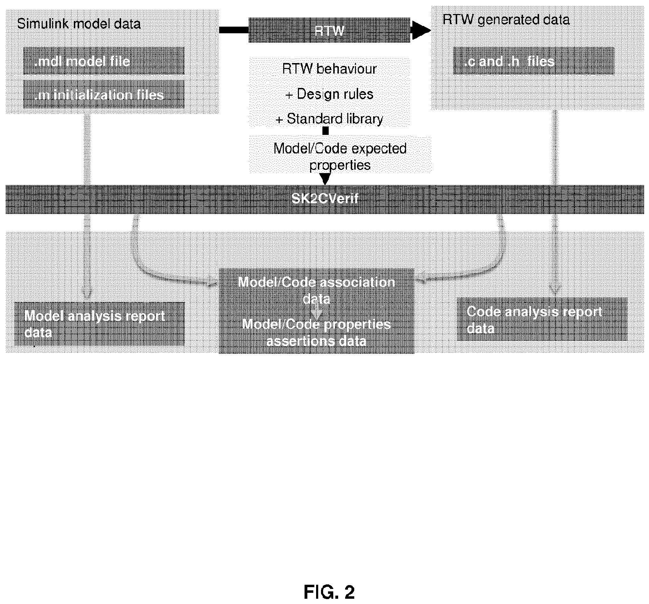

En référence à la **figure 2**, qui représente un exemple dans le cas où on génère du C à partir de Simulink via RTW, le présent procédé (mis en œuvre via un programme nommé SK2CVerif) commence pour cela par la mise en œuvre par les moyens de traitement de données 11 de l'équipement 1 d'une étape (a) d'analyse syntaxique de chacun des premières et secondes instructions. On connait des outils adaptés (« parsers ») souvent issus des technologies de la compilation, par exemple Lex-Yacc (Lex est un analyseur lexical, utilisé en combinaison avec Yacc qui est un analyseur syntaxique).

Par analyse syntaxique, on entend la mise en évidence de la structure, au sens grammatical, des instructions.

L'analyse syntaxique des premières instructions de code est réalisée selon une bibliothèque dudit langage de programmation procédurale, de sorte à produire ce que l'on appelle un arbre syntaxique abstrait (AST, « Abstract Syntax Tree ») des premières instructions.

Il s'agit d'un arbre dont les nœuds internes sont marqués par des opérateurs et dont les feuilles (ou nœuds externes) représentent les opérandes de ces opérateurs. Autrement dit, une feuille est généralement une variable ou une constante. Il s'agit d'une représentation intermédiaire des premières instructions de code.

L'analyse syntaxique des secondes instructions de code est à quant à elle mise en œuvre selon une bibliothèque dudit langage de modélisation, et permet de générer un arbre de modélisation (MDT, « Modelling Tree ») des secondes instructions. Par arbre de modélisation, on entend un arbre représentant l'architecture des blocs (structure d'imbrication et liaisons fonctionnelles) du modèle constitué par les secondes instructions.

Dans une deuxième partie (b), une analyse sémantique suit l'analyse syntaxique. Là où l'analyse syntaxique étudie uniquement la structure du texte, l'analyse sémantique étudie le sens. L'analyse sémantique nécessite une interprétation du modèle en fonction des entrées au même titre que le module de génération ainsi qu'une identification des optimisations possibles des premières instructions.

L'idée est d'identifier grâce aux arbres des propriétés dans les premières et secondes instructions. Plus précisément, l'analyse sémantique de l'arbre syntaxique abstrait (AST) des premières instructions permet d'identifier des motifs représentatifs de blocs fonctionnels élémentaires des premières instructions, et l'analyse de l'arbre de modélisation (MDT) des secondes instructions permet d'identifier des propriétés caractéristiques et spécifiques de blocs fonctionnels élémentaires des secondes instructions.

Par « motif », ou en anglais « pattern », on entend un arrangement typique au sein de la structure de l'AST, i.e. un arrangement compatible avec un squelette donné, qui révèle la présence d'un bloc fonctionnel au sein des premières instructions. En effet, comme un AST est une représentation arborescente des premières instructions, tout bloc fonctionnel valablement codé correspondra à un sous-arbre de l'AST à partir d'un nœud « racine ». En d'autres termes, l'étape (b) consiste typiquement à parcourir l'AST en recherchant des sous-arbres compatibles avec des squelettes prédéterminés.

En ce qui concerne le MDT, le découpage en blocs est par définition évident puisque chaque bloc fonctionnel correspond à un bloc graphique, et il suffit d'identifier des « propriétés » de chaque bloc pour les caractériser. Par exemple le nombre d'entrées/sorties, le type de traitement effectué, etc.

Dans les deux cas, l'objectif est de lister et caractériser les différents blocs dans chacune des premières et deuxièmes instructions de sorte à pouvoir les mettre en perspective.

De façon avantageuse l'analyse sémantique permet en outre de déterminer des « dictionnaires » des premières et secondes instructions dont les blocs sont un des éléments. Plus précisément peuvent être identifiés les variables des premières instructions, et les signaux et les constantes des secondes instructions.

A ce stade, les blocs fonctionnels identifiés pour chacun des premières et secondes instructions sont mis en correspondance deux à deux. En effet, si le code est traçable alors chaque bloc des premières instructions correspond à un bloc équivalent des secondes instructions et vice-versa. La correspondance doit être bijective pour que la traçabilité soit garantie.

Si un bloc des premières instructions n'a pas d'équivalent dans les secondes instructions, c'est que ce bloc correspond à du code en trop qui doit être supprimé des premières instructions.

Si un bloc des secondes instructions n'a pas d'équivalent dans les premières instructions, c'est que la fonction associée est manquante dans le code généré et que celui-ci est probablement déficient.

Si plusieurs blocs des premières instructions correspondent à un seul bloc des secondes instructions, c'est qu'une partie des premières instructions est inutilement redondante et doit être supprimée.

En d'autres termes, la traçabilité des premières instructions de code est confirmée seulement si :
∘ pour chaque bloc des premières instructions il existe un bloc fonctionnellement équivalent des secondes instructions, et
∘ pour chaque bloc des secondes instructions il existe un bloc fonctionnellement équivalent des premières instructions.

Par fonctionnellement équivalent, on entend que les propriétés d'un bloc des secondes instructions coïncident avec les fonctionnalités d'un second bloc des premières instructions. En d'autres termes, la traçabilité des premières instructions de code n'est pas confirmée s'il est impossible de réaliser la mise en correspondance des blocs, si par exemple il existe un bloc des deuxièmes instructions ayant des propriété identifiées qui ne correspondent à aucun des blocs des premières instructions, ou s'il existe un bloc des premières instructions, qui ne présente les propriétés identifiées d'aucun des seconds blocs.

### Détection des problèmes d'interaction

En outre, les dispositions temporelles des blocs doivent correspondre (telle fonction doit suivre telle fonction, etc.). Plus précisément, chaque bloc identifié comprend une interaction avec au moins un autre bloc, l'étape (c) comprenant la mise en correspondance deux à deux desdites interactions, et la confirmation de la traçabilité de premières instructions de code seulement si :
∘ optionnellement, pour chaque interaction entre deux blocs des premières instructions il existe la même interaction entre les deux blocs correspondant des secondes instructions, et
∘ pour chaque interaction entre deux blocs des secondes instructions il existe la même interaction entre les deux blocs correspondant des premières instructions.

Un cas particulier d'interaction est la dépendance temporelle, i.e. le fait qu'un bloc soit mis en œuvre avant ou après un autre, comme il sera expliqué plus loin. Plus précisément, chaque interaction est dans ce mode de réalisation une relation d'ordre partiel.

Cela permet d'éviter des inversions de motifs ou de mauvaises liaisons quand bien mêmes toutes les fonctions serait reprises.

Plus précisément, il est à noter qu'il n'y a pas unicité de la représentation de secondes instructions par des premières instructions. En effet *n* blocs présentent *n!* ordres d'implémentation, mais un grand nombre d'entre eux s'avérèrent acceptables. Cela est dû au fait que l'ordre est partiel et non total, ce qui signifie que certains blocs sont indépendants et peut être mis en œuvre l'un par rapport à l'autre dans un ordre comme dans l'autre.

La vérification de ces relations d'ordre partiel, et non la vérification d'un ordonnancement complet particulier tel qu'on peut le trouver dans l'art antérieur, s'avère une preuve d'indépendance entre le procédé de vérification et le procédé de génération des premières instructions.

Cette mise en correspondance des interactions des blocs relatives aux enchaînements peut se faire en deux sous-étapes :
- les blocs des secondes instructions sont analysés afin de déterminer les interactions entre les blocs des secondes instructions sous la forme d'un ensemble de conditions nécessaires et suffisantes (au sens de la sémantique modèle des secondes instructions), chacune est une relation d'ordre partiel du type Bi < Bj exprimant l'antériorité de Bi par rapport à Bj (en d'autres termes, s'il existe une condition Bi < Bj, c'est que la mise en œuvre de Bj nécessite la mise en œuvre préalable de Bi). Ces conditions sont avantageusement déduites du MDT utilisé comme un graphe.
- L'ordre d'implantation des blocs correspondants des premières instructions est analysé de sorte à vérifier que chacune de ces conditions (i.e. chaque relation d'ordre partiel) soit vérifiée dans les premières instructions. Cela comprend notamment le test de chaque condition. L'idée est qu'une condition Bi < Bj est vérifiée si les premières instructions sont telles que les lignes codant pour Bi sont exécutées avant les lignes codant pour Bj dans les premières instructions, c'est ce que l'on appelle l'ordre d'implémentation (qui ne correspond pas forcément à l'ordre des lignes de code). Si ce n'est pas le cas, une erreur dite de « freshness » est détectée. Si c'est le cas, on est assuré que l'implémentation des premières instructions est une des solutions admissibles quant à l'ordre partiel défini dans les secondes instructions.

En résumé, la vérification que pour chaque interaction entre deux blocs des secondes instructions il existe la même interaction entre les deux blocs correspondant des premières instructions consiste en la vérification que chacune desdites relations d'ordre partiel déterminées entre des blocs des secondes instructions est respectée par l'ordre d'implémentation dans les premières instructions des blocs correspondants des premières instructions

Par exemple, si les secondes instructions codent pour cinq blocs A, B, C, D, E tels que :
- C utilise comme entrée les sorties de B et D ;
- B utilise comme entrée les sorties de A ;
- E utilise comme entrée les sorties de C.

Alors les interactions déterminées sont A < B < C < E (il s'agit en fait de trois condition binaires transitives) et D < C.

A-B-D-C-E est une première solution admissible des premières instructions, D-A-B-C-E est une deuxième solution admissible des premières instructions, mais A-B-C-D-E n'en est pas une.

Dans le cas où des variables, signaux et constantes ont été identifiées, le procédé peut comprendre une étape (d) de mise en correspondance des variables identifiées avec les signaux et constantes identifiés en fonction de règles de génération du dit langage de programmation procédurale à partir du langage de modélisation.

La traçabilité des premières instructions de code n'est alors confirmée que seulement si pour chaque variable identifiée il existe un signal et/ou une constante correspondant identifiés.

Si chacun de ces tests est concluant, on peut être sûr que le code généré est intégralement traçable et transitif vers les modèles d'origine, puisque chaque unité fonctionnelle et chaque variable est vérifiée.

Si sa traçabilité est confirmée les premières instructions de code (ou une version compilée) sont instanciées dans un système 2 tel qu'un aéronef.

### Résultats

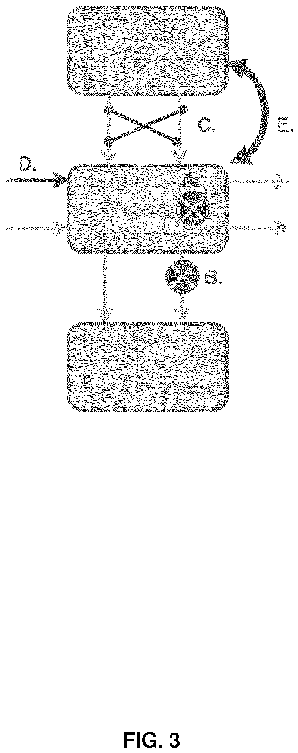

En référence à la **figure 3** (qui représente fonctionnellement trois motifs du code en interaction), le précédent procédé est capable de détecter les erreurs suivantes :
A : « code pattern corruption », c'est-à-dire une erreur à l'intérieur du motif (le bloc n'a pas la fonction qu'il devrait avoir, et aucun n'équivalent n'est trouvé) ;
B : « output variable computation », le résultat de sortie du bloc est faux (et ce dernier ne remplit toujours pas sa fonction) ;
C : « Incorrect input variable connexion », suite à une erreur de câblage le bloc reçoit des variables permutées (mauvaise interaction entre blocs).
D : « Type issue », une variable d'entrée n'a pas le bon type (mauvaise interaction entre blocs) ;
E : « freshness issue ». Deux blocs (chacun valides) ont été permutés (à nouveau des mauvaises interactions entre blocs).

### Système

Selon un deuxième aspect, l'invention concerne un équipement 1 pour la mise en œuvre du précédent procédé. L'équipement 1 est en particulier un poste de génération de code informatique.

Cet équipement comprend des moyens de traitement de données (par exemple un processeur) configurés pour la mise en œuvre de :
(a) Un module d'analyse syntaxique :
   ∘ des premières instructions de code selon une bibliothèque du dit langage de programmation procédurale de sorte à générer un arbre syntaxique abstrait (AST) des premières instructions, et
   ∘ des secondes instructions de code selon une bibliothèque du dit langage de modélisation de sorte à générer un arbre de modélisation (MDT) des secondes instructions
(b) un module d'analyse sémantique :
   ∘ De l'arbre syntaxique abstrait (AST) des premières instructions de sorte à identifier des motifs représentatifs de blocs fonctionnels élémentaires des premières instructions ;
   ∘ De l'arbre de modélisation (MDT) des secondes instructions de sorte à identifier des propriétés caractéristiques de blocs fonctionnels élémentaires des secondes instructions ;
(c) Un module de mise en correspondance deux à deux des blocs fonctionnels élémentaires identifiés, et de confirmation de la traçabilité de premières instructions de code seulement si :
   ∘ pour chaque bloc des premières instructions il existe un bloc fonctionnellement équivalent des secondes instructions, et
   ∘ pour chaque bloc des secondes instructions il existe un bloc fonctionnellement équivalent des premières instructions.

### Produit programme d'ordinateur

Selon un troisième et un quatrième aspects, l'invention concerne un produit programme d'ordinateur comprenant des instructions de code pour l'exécution (en particulier sur les moyens de traitement 11 de l'équipement 1) de vérification de traçabilité de premières instructions de code en un langage de programmation procédurale générées à partir de secondes instructions de code en un langage de modélisation, ainsi que des moyens de stockage lisibles par un équipement informatique (notamment une mémoire 12 de l'équipement 1) sur lequel on trouve ce produit programme d'ordinateur.

## Revendications

1. Procédé de vérification de traçabilité de premières instructions de code en un langage de programmation procédurale générées à partir de secondes instructions de code en un langage de modélisation, comprenant la mise en œuvre par des moyens de traitement de données (11) d'un équipement (1) d'étapes de :
(a) Analyse syntaxique :
∘ des premières instructions de code selon une bibliothèque du dit langage de programmation procédurale de sorte à générer un arbre syntaxique abstrait (AST) des premières instructions, et
∘ des secondes instructions de code selon une bibliothèque dudit langage de modélisation de sorte à générer un arbre de modélisation (MDT) des secondes instructions, ledit arbre de modélisation représentant la structure d'imbrication et les liaisons fonctionnelles du modèle constitué par les secondes instructions ;
(b) Analyse sémantique :
∘ De l'arbre syntaxique abstrait (AST) des premières instructions de sorte à identifier des motifs représentatifs de blocs fonctionnels élémentaires des premières instructions de sorte à identifier lesdits blocs fonctionnels dans les premières instructions ;
∘ De l'arbre de modélisation (MDT) des secondes instructions de sorte à identifier des propriétés caractéristiques de blocs fonctionnels élémentaires des secondes instructions de sorte à identifier lesdits blocs fonctionnels dans les deuxièmes instructions ;
chaque bloc fonctionnel élémentaire constituant une unité logique déterminant un ou plusieurs paramètres de sorties à partir d'un ou plusieurs paramètres d'entrée et d'un éventuel état interne ;
**caractérisé en ce qu'**il comprend en outre la mise en œuvre par les moyens de traitement de données (11) d'une étape de :
(c) Mise en correspondance deux à deux des blocs fonctionnels élémentaires identifiés et d'interactions entre lesdits blocs, et confirmation de la traçabilité de premières instructions de code seulement si :
∘ pour chaque bloc des premières instructions il existe un bloc fonctionnellement équivalent des secondes instructions
∘ pour chaque bloc des secondes instructions il existe un bloc fonctionnellement équivalent des premières instructions ; et
∘ pour chaque interaction entre deux blocs des secondes instructions il existe la même interaction entre les deux blocs correspondant des premières instructions, lesdites interactions entre blocs des secondes instructions correspondant à des relations d'ordre partiel représentant la dépendance temporelle des deux blocs.

2. Procédé selon la revendication 1, dans lequel ledit langage de modélisation est un langage de programmation graphique.

3. Procédé selon la revendication 2, dans lequel ledit langage de programmation graphique est Simulink® ou Scilab.

4. Procédé selon l'une des revendications précédentes, dans lequel le langage de programmation procédurale est un langage basé sur C.

5. Procédé selon l'une des revendications 1 à 4, dans lequel l'étape (c) comprend la détermination préalable d'une pluralité de relations d'ordre partiel entre des blocs des secondes instructions, la vérification que pour chaque interaction entre deux blocs des secondes instructions il existe la même interaction entre les deux blocs correspondant des premières instructions consistant en la vérification que chacune desdites relations d'ordre partiel déterminées entre des blocs des secondes instructions est respectée par l'ordre dans lequel sont mis en œuvre dans les premières instructions les blocs correspondants des premières instructions.

6. Procédé selon l'une des revendications précédentes, dans lequel l'étape (b) comprend également l'analyse sémantique de l'arbre syntaxique abstrait (AST) des premières instructions de sorte à identifier les variables des premières instructions, et l'analyse sémantique de l'arbre de modélisation (MDT) des secondes instructions de sorte à identifier les signaux et les constantes des secondes instructions.

7. Procédé selon la revendication 6, comprenant une étape (d) de mise en correspondance des variables identifiées avec les signaux et constantes identifiés en fonction de règles de génération dudit langage de programmation procédurale à partir du langage de modélisation, et confirmation de la traçabilité de premières instructions de code seulement si pour chaque variable identifiée il existe un signal et/ou une constante correspondant identifiés.

8. Procédé selon l'une des revendications précédentes, comprenant une étape subséquente (e) d'instanciation des premières instructions de code dans un système (2) si leur traçabilité est confirmée.

9. Procédé selon l'une des revendications précédentes, comprenant une étape préalable (a0) de génération des secondes instructions de code à partir des secondes instructions de code par les moyens de traitement de données (11).

10. Equipement (1) de vérification de traçabilité de premières instructions de code en un langage de programmation procédurale produites à partir de secondes instructions de code en un langage de modélisation, comprenant des moyens de traitement de données (11) configurés pour la mise en œuvre de :
- Un module d'analyse syntaxique :
∘ des premières instructions de code selon une bibliothèque dudit langage de programmation procédurale de sorte à générer un arbre syntaxique abstrait (AST) des premières instructions, et
∘ des secondes instructions de code selon une bibliothèque dudit langage de modélisation de sorte à générer un arbre de modélisation (MDT) des secondes instructions, ledit arbre de modélisation représentant la structure d'imbrication et les liaisons fonctionnelles du modèle constitué par les secondes instructions et d'un éventuel état interne ;
- un module d'analyse sémantique :
∘ De l'arbre syntaxique abstrait (AST) des premières instructions de sorte à identifier des motifs représentatifs de blocs fonctionnels élémentaires des premières instructions de sorte à identifier lesdits blocs fonctionnels dans les premières instructions ;
∘ De l'arbre de modélisation (MDT) des secondes instructions de sorte à identifier des propriétés caractéristiques de blocs fonctionnels élémentaires des secondes instructions de sorte à identifier lesdits blocs fonctionnels dans les deuxièmes instructions ;
chaque bloc fonctionnel élémentaire constituant une unité logique déterminant un ou plusieurs paramètres de sortie à partir d'un ou plusieurs paramètres d'entrée ;
**caractérisé en ce que** les moyens de traitement de données (11) sont en outre configurés pour la mise en œuvre de :
- Un module de mise en correspondance deux à deux des blocs fonctionnels élémentaires identifiés et d'interactions entre lesdits blocs, et de confirmation de la traçabilité de premières instructions de code seulement si :
∘ pour chaque bloc des premières instructions il existe un bloc fonctionnellement équivalent des secondes instructions ;
∘ pour chaque bloc des secondes instructions il existe un bloc fonctionnellement équivalent des premières instructions ; et
∘ pour chaque interaction entre deux blocs des secondes instructions il existe la même interaction entre les deux blocs correspondant des premières instructions, lesdites interactions entre blocs des secondes instructions correspondant à des relations d'ordre partiel représentant la dépendance temporelle des deux blocs.

11. Produit programme d'ordinateur comprenant des instructions de code pour l'exécution d'un procédé selon l'une des revendications 1 à 9 de vérification de traçabilité de premières instructions de code en un langage de programmation procédurale générées à partir de secondes instructions de code en un langage de modélisation.

12. Moyens de stockage lisibles par un équipement informatique sur lesquels un produit programme d'ordinateur comprend des instructions de code pour l'exécution d'un procédé selon l'une des revendications 1 à 9 de vérification de traçabilité de premières instructions de code en un langage de programmation procédurale générées à partir de secondes instructions de code en un langage de modélisation.

## Patentansprüche

1. Verfahren zur Überprüfung der Rückverfolgbarkeit von ersten Codebefehlen in einer prozeduralen Programmiersprache, die aus zweiten Codebefehlen in einer Modellierungssprache generiert werden, umfassend die Umsetzung durch Datenverarbeitungsmittel (11) einer Ausrüstung (1) folgender Schritte:
(a) syntaktische Analyse:
• der ersten Codebefehle gemäß einer Bibliothek der prozeduralen Programmiersprache, um einen abstrakten Syntaxbaum AST der ersten Befehle zu generieren, und
• der zweiten Codebefehle gemäß einer Bibliothek der Modellierungssprache, um einen Modellierungsbaum MDT der zweiten Befehle zu generieren, wobei der Modellierungsbaum die Verflechtungsstruktur und die funktionellen Verbindungen des Modells darstellt, das von den zweiten Befehlen gebildet ist;
(b) semantische Analyse:
• des abstrakten Syntaxbaums AST der ersten Befehle, um Motive zu identifizieren, die für elementare funktionelle Blöcke der ersten Befehle repräsentativ sind, um die funktionellen Blöcke in den ersten Befehlen zu identifizieren;
• des Modellierungsbaums MDT der zweiten Befehle, um charakteristische Eigenschaften von elementaren funktionellen Blöcken der zweiten Befehle zu identifizieren, um die funktionellen Blöcke in den zweiten Befehlen zu identifizieren;
wobei jeder elementare funktionelle Block eine logische Einheit darstellt, die einen oder mehrere Ausgangsparameter aus einem oder mehreren Eingangsparametern und einem eventuellen internen Zustand bestimmt;
**dadurch gekennzeichnet, dass** es ferner die Durchführung durch die Datenverarbeitungsmittel (11) eines Schritts umfasst der:
(c) paarweisen Abstimmung der identifizierten elementaren funktionellen Blöcke und von Interaktionen zwischen den Blöcken, und Bestätigung der Rückverfolgbarkeit von ersten Codebefehlen nur wenn:
• es für jeden Block der ersten Befehle einen funktionell äquivalenten Block der zweiten Befehle gibt;
• es für jeden Block der zweiten Befehle einen funktionell äquivalenten Block der ersten Befehle gibt; und
• es für jede Interaktion zwischen zwei Blöcken der zweiten Befehle dieselbe Interaktion zwischen den zwei Blöcken gibt, die den ersten Befehlen entsprechen, wobei die Interaktionen zwischen Blöcken der zweiten Befehle Partialordnungsrelationen entsprechen, welche die temporäre Abhängigkeit der zwei Blöcke darstellen.

2. Verfahren nach Anspruch 1, wobei die Modellierungssprache eine grafische Programmiersprache ist.

3. Verfahren nach Anspruch 2, wobei die grafische Programmiersprache Simulink® oder Scilab ist.

4. Verfahren nach einem der vorangehenden Ansprüche, wobei die prozeduralen Programmiersprache eine auf C basierende Sprache ist.

5. Verfahren nach einem der Ansprüche 1 bis 4, wobei der Schritt (c) die vorherige Bestimmung einer Vielzahl von Partialordnungsrelationen zwischen Blöcken der zweiten Befehle umfasst, wobei die Überprüfung, dass es für jede Interaktion zwischen zwei Blöcken der zweiten Befehle dieselbe Interaktion zwischen den zwei Blöcken gibt, die den ersten Befehlen entsprechen, aus der Überprüfung besteht, dass jede der zwischen den Blöcken der zweiten Befehle bestimmten Partialordnungsrelationen von der Ordnung eingehalten wird, in welcher die Blöcke, die ersten Befehlen entsprechen, in den ersten Befehlen durchgeführt werden.

6. Verfahren nach einem der vorangehenden Ansprüche, wobei der Schritt (b) ebenfalls die semantische Analyse des abstrakten Syntaxbaums AST der ersten Befehle umfasst, um die Variablen der ersten Befehle zu identifizieren, und die semantische Analyse des Modellierungsbaum MDT der zweiten Befehle, um die Signale und die Konstanten der zweiten Befehle zu identifizieren.

7. Verfahren nach Anspruch 6, umfassend einen Schritt (d) der Abstimmung der identifizierten Variablen mit den Signalen und identifizierten Konstanten, die in Abhängigkeit von Regeln der Generierung der prozeduralen Programmiersprache aus der Modellierungssprache identifiziert werden, und Bestätigung der Rückverfolgbarkeit von ersten Codebefehlen nur dann, wenn es für jede identifizierte Variable ein identifiziertes entsprechendes Signal und/oder eine Konstante gibt.

8. Verfahren nach einem der vorangehenden Ansprüche, umfassend einen nachfolgenden Schritt (e) des Instanziierens der ersten Codebefehle in einem System (2), wenn ihre Rückverfolgbarkeit bestätigt ist.

9. Verfahren nach einem der vorangehenden Ansprüche, umfassend einen vorherigen Schritt (a0) des Generierens der ersten Codebefehle aus den zweiten Codebefehlen durch die Datenverarbeitungsmittel (11).

10. Ausrüstung (1) zur Überprüfung der Rückverfolgbarkeit von ersten Codebefehlen in einer prozeduralen Programmiersprache, die aus zweiten Codebefehlen in einer Modellierungssprache generiert werden, umfassend Datenverarbeitungsmittel (11), die konfiguriert sind für die Umsetzung:
- eines syntaktischen Analysemoduls:
• der ersten Codebefehle gemäß einer Bibliothek der prozeduralen Programmiersprache, um einen abstrakten Syntaxbaum AST der ersten Befehle zu generieren, und
• der zweiten Codebefehle gemäß einer Bibliothek der Modellierungssprache, um einen Modellierungsbaum MDT der zweiten Befehle zu generieren, wobei der Modellierungsbaum die Verflechtungsstruktur und die funktionellen Verbindungen des Modells darstellt, das von den zweiten Befehlen und einem eventuellen internen Zustand gebildet ist;
- eines semantischen Analysemoduls:
• des abstrakten Syntaxbaums AST der ersten Befehle, um Motive zu identifizieren, die für elementare funktionelle Blöcke der ersten Befehle repräsentativ sind, um die funktionellen Blöcke in den ersten Befehlen zu identifizieren;
• des Modellierungsbaums MDT der zweiten Befehle, um charakteristische Eigenschaften von elementaren funktionellen Blöcken der zweiten Befehle zu identifizieren, um die funktionellen Blöcke in den zweiten Befehlen zu identifizieren;
wobei jeder elementare funktionelle Block eine logische Einheit darstellt, die einen oder mehrere Ausgangsparameter aus einem oder mehreren Eingangsparametern bestimmt;
**dadurch gekennzeichnet, dass** die Datenverarbeitungsmittel (11) ferner für die Umsetzung konfiguriert sind:
- eines Moduls der paarweisen Abstimmung der identifizierten elementaren funktionellen Blöcke und von Interaktionen zwischen den Blöcken, und Bestätigung der Rückverfolgbarkeit von ersten Codebefehlen nur wenn:
• es für jeden Block der ersten Befehle einen funktionell äquivalenten Block der zweiten Befehle gibt;
• es für jeden Block der zweiten Befehle einen funktionell äquivalenten Block der ersten Befehle gibt; und
• es für jede Interaktion zwischen zwei Blöcken der zweiten Befehle dieselbe Interaktion zwischen den zwei Blöcken gibt, die den ersten Befehlen entsprechen, wobei die Interaktionen zwischen Blöcken der zweiten Befehle partiellen Ordnungsrelationen entsprechen, welche die temporäre Abhängigkeit der zwei Blöcke darstellen.

11. Rechnerprogrammprodukt, umfassend Codebefehle für die Ausführung eines Verfahrens nach einem der Ansprüche 1 bis 9 der Überprüfung der Rückverfolgbarkeit von ersten Codebefehlen in einer prozeduralen Programmiersprache, die aus zweiten Codebefehlen in einer Modellierungssprache generiert werden.

12. Speichermittel, die von einer IT-Ausrüstung lesbar sind, auf denen ein Rechnerprogrammprodukt Codebefehle für die Ausführung eines Verfahrens nach einem der Ansprüche 1 bis 9 der Überprüfung der Rückverfolgbarkeit von ersten Codebefehlen in einer prozeduralen Programmiersprache umfasst, die aus zweiten Codebefehlen in einer Modellierungssprache generiert werden.

## Claims

1. A method for verifying traceability of first code instructions in a procedural programming language generated from second code instructions in a modelling language, comprising the application by data processing means (11) of a piece of equipment (1) of steps for:
(a) Syntax analysis:
∘ of the first code instructions according to a library of said procedural programming language so as to generate an abstract syntax tree, AST, of the first instructions, and
∘ of the second code instructions according to a library of said modelling language so as to generate a modelling tree, MDT, of the second instructions, said modelling tree representing the nesting structure and the functional links of the model formed with the second instructions;
(b) A semantic analysis:
∘ of the abstract syntax tree, AST, of the first instructions so as to identify patterns representative of elementary functional blocks of the first instructions so as to identify said functional blocks in the first instructions;
∘ of the modelling tree, MDT, of the second instructions so as to identify properties characteristic of elementary functional blocks of the second instructions so as to identify said functional blocks in the second instructions;
each elementary functional block constituting a logical unit determining one or several output parameters from one or several input parameters and from a possible internal state;
**characterized in that** it further comprises the application by the data processing means (11) of a step of:
(c) Pairwise matching of the identified elementary functional blocks and of interactions between said blocks, and confirming traceability of the first code instructions only if:
∘ for each block of the first instructions, there exists a functionally equivalent block of the second instructions;
∘ for each block of the second instructions, there exists a functionally equivalent block of the first instructions; and
∘ for each interaction between two blocks of the second instructions, there exist the same interaction between the two corresponding blocks of the first instructions, said interactions between blocks of the second instructions corresponding to partial order relations representing the time dependency of the two blocks.

2. The method according to claim 1, wherein said modelling language is a graphic programming language.

3. The method according to claim 2, wherein said graphic programming language is Simulink® or Scilab.

4. The method according to one of the preceding claims, wherein the procedural programming language is a language based on C.

5. The method according to one of claims 1 to 4, wherein step (c) comprises the preliminary determination of a plurality of partial order relations between blocks of the second instructions, the verification that for each interaction between two blocks of the second instructions, there exist the same interaction between the two corresponding blocks of the first instructions, consisting in the verification that each of said partial order relations determined between blocks of the second instructions is observed by the implementation order in the first instructions of the corresponding blocks of the first instructions.

6. The method according to one of the preceding claims, wherein the step (b) also comprises the semantic analysis of the abstract syntax tree, AST, of the first instructions so as to identify the variables of the first instructions, and the semantic analysis of the modelling tree, MDT, of the second instructions so as to identify the signals and the constants of the second instructions.

7. The method according to claim 6, comprising a step (d) for matching the identified variables with the identified signals and constants, identified depending on generation rules of said procedural programming language from the modelling language, and confirmation of traceability of first code instructions only if for each identified variable, there exists identified corresponding signal and/or constant.

8. The method according to one of the preceding claims, comprising a subsequent step (e) for instantiation of the first code instructions in a system (2) if their traceability is confirmed.

9. The method according to one of the preceding claims, comprising a preliminary step (a0) for generating the first code instructions from the second code instructions by the data processing means (11).

10. A piece of equipment (1) for verifying traceability of first code instructions in a procedural programming language produced from second code instructions in a modelling language, comprising data processing means (11) configured for applying:
- A syntax analysis module:
∘ of the first code instructions according to a library of said procedural programming language so as to generate an abstract syntax tree, AST, of the first instructions, and
∘ of the second code instructions according to a library of said modelling language so as to generate a modelling tree, MDT, of the second instructions, said modelling tree representing the nesting structure and the functional links of the model formed with the second instructions and a possible internal state;
- A semantic analysis module:
∘ of the abstract syntax tree, AST, of the first instructions so as to identify patterns representative of elementary functional blocks of the first instructions so as to identify said functional blocks in the first instructions;
∘ of the modelling tree, MDT, of the second instructions so as to identify properties characteristic of elementary functional blocks of the second instructions so as to identify said functional blocks in the second instructions;
each elementary functional block constituting a logical unit determining one or several output parameters from one or several input parameters;
**characterized in that** the data processing means (11) are further configured for the implementation of:
- A module for pairwise matching of the identified elementary functional blocks and of interactions between said blocks, and for confirming traceability of first code instructions only if:
∘ for each block of the first instructions, there exists a functionally equivalent block of the second instructions;
∘ for each block of the second instructions, there exists a functionally equivalent block of the first instructions; and
∘ for each interaction between two blocks of the second instructions, there exist the same interaction between the two corresponding blocks of the first instructions, said interactions between blocks of the second instructions corresponding to partial order relations representing the time dependency of the two blocks.

11. A computer program product comprising code instructions for executing a method according to one of claims 1 to 9 for verifying traceability of first code instructions in a procedural programming language generated from second code instructions in a modelling language.

12. A storage means legible by a piece of computer equipment on which a computer program product comprises code instructions for executing a method according to one of claims 1 to 9 for verifying traceability of the first code instructions in a procedural programming language generated from second code instructions in a modelling language.
